**Europäisches Patentamt**

**European Patent Office**

**Office européen des brevets**

(19)

(11) Veröffentlichungsnummer: **0 162 192**
**B1**

(12) **EUROPÄISCHE PATENTSCHRIFT**

(45) Veröffentlichungstag der Patentschrift: **28.11.90**

(51) Int. Cl.⁵: **B 23 K 20/00**

(21) Anmeldenummer: **85101361.5**

(22) Anmeldetag: **08.02.85**

(54) **Verfahren zum kohärenten Verbinden von Bauteilen mit einem deformierbaren Hilfsmaterial, insbesondere zum Verbinden dünnwandiger Bauteile.**

(30) Priorität: **14.05.84 HU 185584**

(43) Veröffentlichungstag der Anmeldung:
**27.11.85 Patentblatt 85/48**

(45) Bekanntmachung des Hinweises auf die
Patenterteilung:
**28.11.90 Patentblatt 90/48**

(84) Benannte Vertragsstaaten:
**AT BE CH DE FR GB IT LI LU NL SE**

(56) Entgegenhaltungen:
**AT-B- 327 642**
**DE-A-2 914 314**
**DE-B-1 261 378**
**JP-A-57 159 282**

(73) Patentinhaber: **Gál, Pál, Dipl.-Ing.**
**Fadrusz u. 12**
**H-1114 Budapest (HU)**

(72) Erfinder: **Gál, Pál, Dipl.-Ing.**
**Fadrusz u. 12**
**H-1114 Budapest (HU)**

(74) Vertreter: **Patentanwälte Viering & Jentschura**
**Steinsdorfstrasse 6**
**D-8000 München 22 (DE)**

Courier Press, Leamington Spa, England.

EP 0 162 192 B1

**Beschreibung**

Die Erfindung betrifft ein Verfahren zum Herstellen einer Verbindung zwischen zwei Aluminium-Wärmetauscherteilen nach dem Oberbegriff des Patentanspruchs 1.

Das Verfahren kann vorteilhafterweise bei wärmeaustauschenden Bauteilen verschiedener Bestimmung, Geometrie und Struktur zur Erzeugung eines metallischen Verbundes aus demselben Material verwendet werden.

Es sind Verfahren bekannt, bei denen zur Sicherstellung der metallischen Verbindung die montierten Bauteile—nachdem die Oberfläche vorbereit worden ist—in ein geschmolzenes Metallbad eingetaucht werden, um an den Flächen einen gleichmäßigen Metallüberzug zu erhalten, wobei das die Bauteile überziehende Metall gleichzeitig dieselben metallisch miteinander verbindet. Diese Metallbäder bestehen aus Schwermetallen mit einem niedrigen Schmelzpunkt und aus deren Legierungen. Derartige Metallbäder sind teuer und die Verwendung von Schwermetallen ist energieaufwendig (z.B. Sn, Sn+Pb, Zn Bäder).

Bei anderen Verfahren werden die zu verbindenden Bauteile im voraus mit den vorerwähnten Schwermetallen oder mit irgendwelchen Legierungen derselben vollständig oder teilweise überzogen. Danach werden die lückenfrei zusammengesetzten Bauteile mit einem Verflüssiger überzogen und mit Hilfe einer Gasflamme oder in einem Ofen auf die Schmelztemperatur des Überzugsmetalls erhitzt, wodurch die sich an der Oberfläche der Bauteile befindenden Metallüberzüge miteinander verschmolzen werden. Diese Lösung ist wegen der bei der Montage auftretenden Ungenauigkeiten keineswegs zuverlässig, und außerdem ist dabei der Bedarf an Schwermetall äußerst hoch. Als Literaturstellen für derartige Verfahren werden die HU-PS'en 154 673, 157 652 und 161 650 (Fig. 11, 12 und 15) sowie die Patentanmeldung HU-FE 975 erwähnt.

Es sind auch Verfahren bekannt, bei denen die zu verbindenden Bauteile durch elektrisches Bogenschweißen, unter Schutzgas, Punkt- oder Ultraschallschweißen bzw. Flammen-, oder Plasmaschweißen miteinander verbunden werden. Diese Verfahren beanspruchen recht viele Mittel, die Produktivität ist niedrig und aufgrund der bekannten Schwierigkeiten beim Schweißen und Löten können diese Verfahren bei Leichtmetallen überhaupt nicht verwendet werden. Ein derartiges Verfahren ist im übrigen in der GB-PS 1 245 580 beschrieben.

Bei anderen Verfahren wird diese Schwierigkeit dadurch überbrückt, daß die Bauteile mit verschiedenen synthetischen Stoffen zusammengeklebt werden. Dadurch kann aber kein fester Verbund erreicht werden, außerdem muß die Oberfläche zur Durchführung des Arbeitsgangs in recht komplizierter Weise vorbereitet werden. Ferner weicht die Struktur des Klebestoffes von jener des Metalls ab, so daß das Produkt weder bei thermischer noch bei elektrischer Leitung verwendet werden kann. Es besteht daher auch nicht die Möglichkeit, derartig miteinander verbundene Bauteile dort einzusetzen, wo sie einer dauernden Hitzebeanspruchung ausgesetzt sind, da der Klebestoff unter der Wärmeinwirkung abgebaut wird, und durch die sich aus der Dilatationsdifferenz ergebende Spannung der Klebstoff ermüdet usw. Ein derartiges Verfahren ist teilweise in der ungarischen Patentanmeldung 2415/80 beschrieben.

Es sind auch Verfahren bekannt, bei denen simultan mit der Herstellung die Bauteile durch elektrisches Punkt- oder Ultraschallschweißen an die Oberfläche der zu verbindenden Bauteile befestigt werden. Wenngleich diese Verfahren hinsichtlich der Produktivität gegenüber den vorerwähnten einen gewissen Fortschritt darstellen, können die sonstigen technologischen Nachteile derartiger Verfahren keineswegs eliminiert werden. Ein derartiges Verfahren ist z.B. in dem HU-PS 175 919 beschrieben.

Es sind ferner Verfahren bekannt, bei denen bei als Wärmetauscher dienenden Kostruktionen zwischen dem das Kühlmedium leitenden Bauteil und den wärmeabstrahlenden Rippen lediglich ein metallischer mechanischer Verbund besteht. Da dabei keine kohäsive Berührung dieser Teile erreicht wird, bildet sich bei den sich berührenden Flächen eine Wärmebrücke, was einen unbefriedigenden Wärmedurchgang zur Folge hat. Aufgrund der unterschiedlichen Dilatation der Bauteile sowie der Erschütterungen während des Betriebs entfernen sich die Kontaktflächen voneinander, so daß der thermische Wirkungsgrad schlechter wird, Ein derartiges Verfahren ist in der Patentanmeldung HU-A-AO-308 beschrieben.

Ferner wurde vorgeschlagen, die Bauteile simultan mit ihrer Herstellung mittels Warmpreßschweißen zu verbinden, bei dem das Material verwendet wird, aus dem die Bauteile bestehen. Die Anwendungsmöglichkeit dieser Verfahren ist durch die Materialstärke begrenzt, da diese Verfahren bei dünnwandigen Konstruktionen nach dem Stand der Technik keinesfalls verwendet werden können, da das Zustandekommen der Preßschweißung nur mit einer äußerst hohen Preßkraft oder mit einer hohen Arbeitstemperatur gewährleitstet werden kann, so daß dünnwandige Bauteile zerstört würden. Diese beiden technologischen Bedingungen beeinträchtigen die Materialstruktur, Festigkeit, Dichte, usw. des herzustellenden Verbundes.

Ein derartiges Verfahren zum Herstelen einer Verbindung zwischen zwei metallischen Bauteilen durch Warmpreßschweißen ist aus der JP—A—57-159 283 bekannt. Mittels dem in dieser Druckschrift beschriebenen Verfahren können zum Beispiel zwei metallische Bauteile auf die Weise stumpf miteinander verbunden werden, daß sie jeweils in aufeinanderzubewegbare Spannvorrichtungen eingespannt sind und über mittels zweier Elektroden erhitzten und zwischen die sich aufeinanderzubewegenden Bauteile eingebrachten Hilfsmaterials in Form von Drähten miteinander verschweißt werden. Dies geschieht insbesondere dadurch, daß die hocherhitzten Drähte sich leicht deformieren lassen und in die durch Wärmeübergang ebenfalls erhitzten Bauteile beim Schweißvorgang einpressen lassen.

Ein ähnliches Verfahren ist aus der JP-57-159282 bekannt. Gemäß diesem Verfahren werden zwei Bleche stumpf, d.h. über ihre Stirnflächen miteinander verbunden. Als verbindendes Hilfsmaterial wird eine von einem Gasbrenner erhitzte Platte verwendet, die erwärmt und durch das stumpfe Zusammenpressen der zu verschweißenden Bauteile verformt und zum Teil seitlich aus dem Schweißspalt herausgequetscht wird. Die dadurch entstehenden Grate werden danach spanend abgetragen. Ein Nachteil dieses Verfahrens ist es, daß das Hilfsmaterial größenteils aus dem Spalt herausgequetscht wird und so das Hilfsmaterial selbst nicht in gewünschtem Maße zum Erzielen der Verbindung dient. Daher kommt bei diesem Verfahren die Verbindung größenteils durch Verformen der miteinander zu verbindenden Bauteile selbst aufgrund der von dem Hilfsmaterial abgegebenen Wärme zustande. Aus diesem Grund kann dieses Verfahren nur für das stumpfe Zusammenschweißen zweier Bauteile ausreichender Dicke angewendet werden.

Alle erwähnten Verfahren bringen eine hochgradige Beanspruchung der Produktionsmittel hinsichtlich der Festigkeit und der thermischen Belastung mit sich, so daß es aus diesem Grunde nicht möglich ist, beispielsweise bei Wärmetauschern in sehr geringen Abständen angeordnete und eine große Abstrahlfläche aufweisende Rippenbleche anzuschweißen, obgleich vom Standpunkt der Luft- und Wärmetechnik beide geometrischen Forderungen die Basis einer zeitgemäßen Kostruktion und Produktion bilden.

Im allgemeinen kann festgestellt werden, daß für die bisher bekannten Verfahren zur Verformung des Werkstoffes ausschließlich dickwandigere Bauteile erforderlich waren, als es die physikalischen Eigenschaften der Bauteile eigentlich erforderten. Aus diesem Grunde wurden die Einrichtungen mit einem größeren Materialaufwand, mit höheren Kosten und größerem Eigengewicht gefertigt, als es unter Anwendung einer geeigneten Fertigungstechnologie die Materialcharakteristiken erlaubt hätten.

Aufgrund der bei den bisher bekannten Verfahren auftretenden hohen Beanspruchungen hinsichtlich der Festigkeit und der thermischen Belastung ermöglichten die Fertigungsanlagen keineswegs die Herstellung von kompakten Wärmetauschern mit metallischen Verbindungen, die aus demselben Material wie die Wärmetauscher hergestellt sind. Nach den bekannten Verfahren konnten ausschließlich elementare Wärmetauschereinheiten stumpf zusammengeschweißt werden.

Die Erfindung löst die Aufgabe, ein gattungsgemäßes Verfahren zum Herstellen einer Verbindung zwischen zwei dünnwändigen, einander überlappenden metallischen Bauteilen über aus gleichem Werkstoff wie diese bestehendes Hilfsmaterial bereitzustellen, wobei zwischen den Verbundpartnern eine sehr widerstandsfähige kohäsive Verbindung zustandekommt.

Diese Aufgabe wird erfindungsgemäß durch die Merkmale im kennzeichnenden Teil des Patentanspruchs 1 gelöst. Eine bevorzugte Ausgestaltung ist in dem Unteranspruch 2 angegeben. So kann mit Hilfe des erfindungsgemäßen Verfahrens:

1) eine höhere Produktivität erreicht werden,

2) ist der entstandene Verbund von höherer Festigkeit, die Standzeit ist höher,

3) wird vom Standpunkt der Wärmeleitung eine günstigere kohäsive Verbindung erreicht, und

4) wird eine gegenüber extremen Beanspruchungen und Schwingungen beständige Verbindung zustande gebracht.

Die Erfindung beruht u.a. auf folgenden Erkenntnissen;

Zum einen können zwei dünne (0,1—0,3 mm dicke) Bleche mittels Preßschweißen dadurch zusammengescheißt werden, daß auf die zur Verbindung bestimmte Stelle ein Hilfsmaterial—dessen Dicke z.B., um eine Größenordnung die jeweilige Blechstärke übertriffe—gelegt wird, danach die Bauteile auf die Preßschweißtemperatur erhitzt werden und im nächsten Arbeitsgang die Bleche—die einander gegenüberliegen—mit der Kraft F zusammengepreßt werden, wobei sich das Hilfsmaterial in einer zu der Wirkungslinie der Kraft F senkrechten Richtung deformiert und an der deformierten Fläche die beiden Bleche zusammengeschweißt werden.

Zum anderen wird bei Leichtmetallen durch die sich an der Oberfläche kontinuierlich neubildende elastische Oxydschicht die Durchführung von Warmpreßschweißungen behindert. In einem Material mit einem dünnen Querschnitt ist es schon recht schwierig eine solche Deformation zu erzeugen, daß dadurch die Oxydschicht zerreißen würde. Der Erfindungsgedanke liegt darin, daß das deformierbare Hilfsmaterial an den zu verschweißenden Flächenteilen haftet und im Laufe seiner weiteren Deformation die Flächenoxydschicht aufreißt, so daß auf diese Weise auf einer metallreinen Fläche ein inniger Kontakt zustande kommen und eine metallurgische Verbindung erreicht werden kann.

Eine der Bedingungen für die Durchführung des Preßschweißens besteht in der hochgradigen Materialverformung, deren Größe etwa bei 30—50% des Querschnittes liegt.

Die Erfindung beruht auf der Erkenntnis, daß das zwischen die zu verschweißenden Flächen eingelegte, deformierbare Hilfsmaterial unter der Wirkung der Kraft F in die Fläche der zu verschweißenden Materialien hineingedrückt wird, wonach die Kraft F das Hilfsmaterial weiter deformiert: dabei wird das Hilfsmaterial flacher, die gleitenden Materialteilchen reißen die Kristallite der zu verschweißenden Flächen mit sich und die Teilchen des deformierbaren Materials werden in die in dem Kristallgitter entstehenden Mikroteile eingebaut, wodurch eine kohäsive Verbindung zustandekommt.

Das Zustandekommen der Preßschweißung bzw. der Verbindung hängt von der Temperatur, der Zeit und Preßkraft ab. Wenn Zeit und Temperatur vorgegebene technologische Parameter darstellen, wird die Ausbildung der Verbindung durch die spezifische Preßkraft beeinflußt. Der Erfindungsgedanke liegt darin, daß die Einheitspreßkraft eine solche Größe hat, daß sich eine derart deformierende, spezifisch große aktive Preßkraft einstellt, daß deren Wirkung nur im Bezug auf den Querschnitt des zu deformierenden Hilfsmaterials zu berücksichtigen ist, wodurch eben nur ein Bruchteil der Arbeit erforderlich ist, die sonst erforderlich währe, wenn die zu verschweißenden Blechflächen gegeneinander gepreßt werden müßten.

Ein weiterer Vorteil des erfindungsgemäßen Verfahrens liegt darin, daß das deformierbare Hilfsmaterial sich infolge seines elektrischen Widerstands mittels Stromdurchfluchtung selbst erhitzt und neben der Eigenerwärmung mit der abgestrahlten Wärme des Hilfsmaterials auch die sich in dessen Nähe befindenden zu verschweißenden Flächenteile erwärmt werden. Bei der Durchführung des Preßschweißens führt das heiß deformierbare Hilfsmaterial auch bei einer geringeren Preßkraft F eine bedeutende Deformation aus, während seine Teilchen in dem Kristallgitter der zu verschweißenden Flächen immer aktiver werden.

Ein weiterer Vorteil liegt darin, daß, da das erfindungsgemäße Verfahren bei Leichtmetallen verwendet wird, der elektrische Widerstand des Leichtmetalls proportional der Temperatur ist, auf diese Weise wird sich das deformierbare Leichtmetall-Hilfsmaterial bei einer vorgegebenen elektrischen Leistung selbst aufheizen.

Ferner hat sich herausgestellt, daß wenigstens an dem einen der zusammenzuschweißenden Flächenteile bei deren Anfertigung eine deformierbare, als Hilfsmaterial wirkende Rippe ausgebildet werden kann. Diese Rippe deformiert sich während des Warmpreßschweißens und kommt in eine kohäsive Verbindung mit dem das Gegenstück bildenden Bauteil.

Ein weiterer Vorteil liegt darin, daß bei druckbeständigen Gefäßen durch die Anwendung des erfindungsgemäßen Verfahrens feste, dichte und homogene Verbindungen erzeugt werden können, was bei Leichtmetallen einen bedeutenden technologischen Fortschritt darstellt.

Wo Druck und Korrosionsbeständigkeit es erlauben, kann ein dünnwandiges Profil für die Medienströmung eingesetzt werden, da im Sinne der Erfindung während des Warmpreßschweißens das deformierbare Hilfsmaterial in die dünne Profilwand eingeschweißt wird, wodurch die Wand durch das Schweißen verstärkt und nicht geschwächt wird.

Es wurden folgende Werte für die thermischen Widerstände gemessen:

—bei mechanischen Verbindungen, bei A1/A1 Werkstoff beträgt der Wärmewiderstand: 0,05 kW/m²°C;

—bei einem weichgelöteten Werkstoff beträgt der Wärmewiderstand: 0,025 kW/m²°C;

—mit einem deformierbaren Aluminiumhilfsmaterial beträgt der Wärmewiderstand der kohäsiven Verbindung: 0,01 kW/m²°C.

Eine weitere Charakteristik des erfindungsgemäßen Verfahrens besteht darin, daß die Wärmeübertragungsfähigkeit der durch Warmpreßschweißen erzielten Verbindungen unter Anwendung der an den sich berührenden Flächen streckenweise angeordneten, deformierbaren Hilfsmaterialien die Wärmeübertragungsleistung der bisher bekannten und verwendeten Verbindungsweisen weit übertrifft. Auf diese Weise erhält man Wärmetauscher mit ausgezeichneter Leistung und gutem Wirkungsgrad der kühlrippen.

Ein weiterer, wesentlicher Vorteil der Erfindung liegt darin, daß, wenn bei dem Warmpreßschweißverfahren deformierbares Hilfsmaterial angewendet wird, der Prozeß keinen Verflüssiger oder kein Deckmaterial beansprucht. Die aus dem eigenen Material durch Warmpreßschweißen hergestellten Verbindungen ergeben ohne etwaige Nachbehandlung korrosionsbeständige Einrichtungen mit langer Lebensdauer.

Die Festigkeit der mit deformierbarem Hilfsmaterial zustandegekommenen Verbindungen ist mit jener des Grundstoffes identisch, sind gegenüber Schwingungen und wiederholten Wärmebelastungen beständig und sind gegenüber Ermüdung unempfindlich.

Das erfindungsgemäße Verfahren wird anhand der beiliegenden Zeichnungen näher erläutert. Mit Hinsicht darauf, daß die Anwendung bei der Wärmetasucherproduktion erfolgt, sind die einzelnen Ausführungsbeispiel aus diesem Themenkreis entnommen. In der Zeichnung zeigt:

Fig. 1 im Schnitt einige Einzelheiten der zum Warmpreßschweißen vorbereiteten Blechstreifen,

Fig. 2 im Schnitt der durch Warmpreßschweißen verbundenen Blechstreifen,

Fig. 3 im Schnitt einen Teil eines für das Warmpreßschweißen vorbereiteten, flachen mediumleitenden Profils eines Wärmetauschers mit Innenrippen, der mit dem Profil zu verschweißenden Rippe sowie des zwischen Profil und Rippe angeordneten zylindrischen, selbsterwärmenden, deformierbaren Hilfsmaterials,

Fig. 4 im Schnitt die miteinander verschweißten Teile von Profil und Rippe (vgl. Figur 3),

Fig. 5 im Schnitt einen Teil eines Wärmetausches, der für das Verschweißen eines flachen mediumleitenden Profils mit einem Rippenteil vorbereitet ist, wobei an der der Rippe zugewandten Fläche des Profils Deformationsrippen ausgebildet sind.

Fig. 6 im Schnitt die miteinander nach Figur 5 verschweißten Teile von Profile und Rippe.

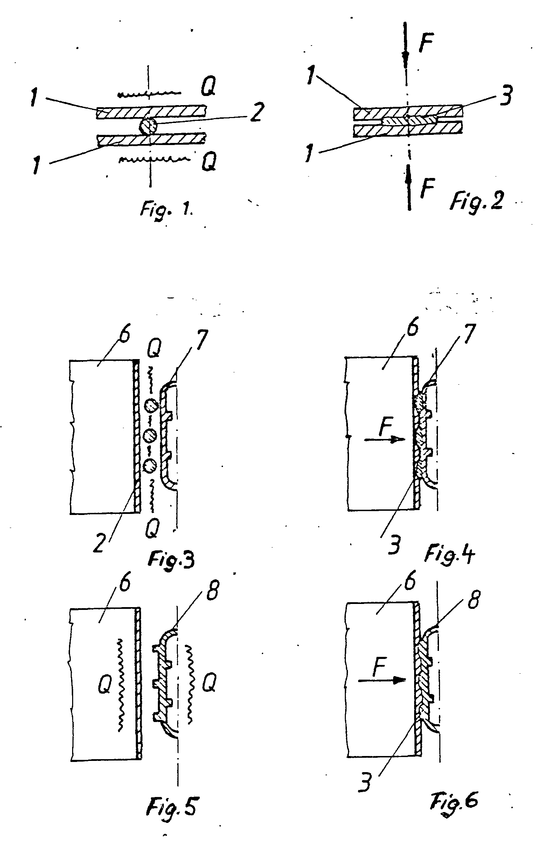

Bei den in Figure 1 dargestellten Blechen 1 sind die einander zugewandten Flächen als sogenannte metallreine Flächen ausgebildet, zwischen denen ein deformierbares, im Querschnitt kreisförmig ausgebildetes Hilfsmaterial 2 angeordnet ist, dessen Durchmesser größer als die Blechstärke der Bleche 1 ist und dessen Werkstoff mit jenem der Bleche 1 übereinstimmt. Der zur Vorerwärmung für das Warmpreßschweißen diendende Wärmestrahler ist mit Q bezeichnet.

Aus Figur 2 sind die vorerwärmten Bleche 1 nach dem unter der Wirkung der Kraft F erfolgten Warmpreßschweißen ersichtlich. Dabei handelt es sich um eine kohäsive Verbindung 3, die durch das deformierbare Hilfsmaterial 2 zustandegekommen ist, und zwar dergestalt, daß sich das Hilfsmaterial während seiner Querschnittsänderung zu einem flachen Streifen in das in der Nähe der Oberfläche der Bleche 1 vorhandene Materialgefüge metallursgisch einbaute.

Das aus den Fig. 1 und 2 ersichtliche Verfahren kann vorzugsweise zur Verbindung von Blechen, zum Verschweißen einer Rohrwand mit der Wasserkammer von Wasser- und Ölkühlern von Kraftfahrzeugen, zum Anschluß von elektrischen Leitschienen, oder zur Verbindung schwer schweißbarer Leichtmetallbleche u.dgl. verwendet werden.

Aus Figur 3 sind eine gefaltete oder mit einem Schweißansatz versehene Rippe 6, ein auf der der Rippe 6 zugewandten Seite ebenflächig ausgebildetes mediumleitendes Profil 7, das vorzugsweise über eine Innenrippe verfügt, das deformierbare Hilfsmaterial 2 und der Wärmestrahler Q ersichtlich.

Wenn nun der Draht des deformierbaren Hilfsmaterials 2 an eine Spannungsquelle angeschlossen wird, erwärmt dieser sich infolge seines elektrischen Widerstands und kann so bis zur Temperatur der Warmverformbarkeit des Hilfsmaterials 2 aufgeheizt werden. Sobald das deformierbare Hilfsmaterial 2 bzw. die von diesem abgestrahlte Wärme die Flächen der in seiner Nähe befindlichen Rippe 6 und des Profils 7 auf die erforderliche Temperatur erwärmt hat, wird der Strom abgeschaltet und das Warmpreßschweißen kann durchgeführt werden. Um einen besseren Wirkungsgrad bei der Heizung erreichen zu können, ist es vorteilhaft die zusammenzuschweißende Einheit während der Aufheizperiode in einen zugfreien, wärmeisolierenden Behälter einzusetzen. Eine andere mögliche Lösung besteht darin, die montierte Einheit in einem zur Wärmezufuhr geeigneten Ofen auf die für das Warmpreßschweißen erforderliche Temperatur aufzuheizen.

Aus Figur 4 ist die unter Wirkung der Kraft F entstandene Warmpreßschweißung ersichtlich, wobei die kohäsive Verbindung 3 mit Hilfe des deformierbaren Hilfsmaterials 2 geschaffen wurde, das in das Materialgefüge der miteinander in Berührung stehenden Flächen der Rippe 6 und des Profils 7 eingreift.

Aus Figur 5 sind eine gefaltete oder mit einem Schweißansatz versehene Rippe 6, ein Profil 8 mit an seiner Außenseite ausgebildeten Deformationsrippen und die Wärmeübergabe verbessernden und/oder als Distanzstück dienenden Rippen an der dem Profil 6 zugewandten Innenseite ersichtlich, wobei das Profil 8 zum Hindurchleiten eines Mediums dient und mit Q ein Wärmestrahler bezeichnet ist, der zur Vorwärmung für das Preßschweißen dient.

Im Sinne des Verfahrens kann in dem Inneren des Profils 8 eine auch als Halter dienende Heizpatrone angeordnet werden, während die die Rippe 6 umbiegende bzw. faltende Klinge dem Schweißansatz der Rippe Wärme zuführen kann. Das Warmpreßschweißen kann so vorgenommen werden, daß die den Schweißansatz der Rippe 6 an ihre Stelle drückende warme Klinge den Schweißansatz mit einer solchen Kraft an die äußeren Rippen des Profils 8 preßt, daß sich diese bis zum Zustandekommen der Warmpreßschweißung deformieren.

Wie aus den Figuren 1 bis 6 ersichtlich, kann das vorgeschlagene erfindungsgemäße Verfahren in einem weiten Kreise, innerhalb eines weiten Maßbereichs verwendet werden. Es ermöglicht die zeitgemäße Verwendung von Aluminium mit einem gegenüber den bekannten Verfahren fortschrittlicheren Charakter.

**Patentansprüche**

1. Verfahren zum Herstellen einer Verbindung zwischen zwei Aluminium-Wärmetauscherteilen (1, 4—10, 12) durch Warmpreßschweißen, bei welchem zwischen den zu verbindenden einander überlappenden Flächen der Wärmetauscherteile ein deformierbares Hilfsmaterial (2, 8, 11) angeordnet wird, das mit den zu verbindenden Flächen auf Warmpreßtemperatur erwärmt wird, wonach die Bauteile und das Hilfsmaterial aneinandergepreßt werden, wodurch das Hilfsmaterial plastisch verformt wird und sich mit den Bauteilen verbindet, wobei als Werkstoff für die Wärmetauscherbauteile und das Hilfsmaterial der gleiche Werkstoff verwendet wird und das Hilfsmaterial (2), das in Form von Rippen an einem der Bauteile (8) oder in Form von losem Drahtmaterial ausgebildet ist, unter der zu den Verbindungsflächen der Bauteile rechtwinklig verlaufenden Preßrichtung rechtwinklig zur Wirkungslinie der Preßkraft und zu der Längsrichtung des Hilfsmaterials in einem 30%—50% betragenden Maße deformiert wird, derart, daß das fließende Hilfsmaterial sich zwischen den einander überlappenden Flächen der Bauteile ausbreitet und dadurch an diesen Verbindungsflächen die Flächenoxidschichten und die Kristallgitter der Wärmetauscherbauteile aufreißt und in die Kristallgitter kohäsiv eindringt.

2. Verfahren nach Anspruch 1, dadurch gekennzeichnet, daß das Hilfsmaterial (2) und die Bauteile (6, 7) durch Widerstandserwärmung des Hilfsmaterials erwärmt werden.

**Revendications**

1. Procédé pour tablir une jonction entre deux parties en aluminium d'un changeur thermique (1, 4—10, 12) par soudage chaud avec pression, procédé dans lequel un materiau auxiliaire (2, 8, 11) déformable est arrangé entre les surfaces se recouvrantes des parties d'un changeur thermique joindre et est chauffé, avec les surfaces joindre, la temperature du soudage chaud avec pression, ensuite les parties de construction et le matriau auxiliaire sont pressés les une contre les autres, ainsi déformant de façon plastique le matriau auxiliaire en le joignant aux parties de construction, le même matriau tant utilis pour les parties d'un changeur thermique et pour le matriau auxiliaire, et le matriau auxiliaire (2) tant arrangé en forme de nervures sur l'une des parties de construction (8) ou en forme d'un fil detach, le matriau auxiliaire tant form, sous l'effet pressant perpendiculaire aux surfaces de jonction des parties de construction, un degr de 30% 50% orthogonalement, d'une part, la direction longitudinale du matriau auxiliaire et, d'autre part, la ligne d'effet de la force pressante, de façon que le matriau auxiliaire cdant se répand entre les surfaces se recouvrantes des parties de construction, ainsi dechirant sur lesdites surfaces de jonction les couches d'oxyde superficielles et les reseaux cristallins des parties de l'changeur thermique et penetrant dans les reseaux cristallins de manire cohesive.

2. Procédé selon la revendication 1, caractérisé en ce que le matriau auxiliaire (2) et les parties de construction (6, 7) sont chauffés par chauffage ohmique du matriau auxiliaire.

**Claims**

1. Method for establishing a connection between two aluminium heat exchanger parts (1, 4—10, 12) by hot-pressure welding, wherein a deformable auxiliary material (2, 8, 11) is arranged between the overlapping surfaces of the heat exchanger parts to be connected and is heated to the hot-pressure temperature with the surfaces to be connected, whereupon the construction parts and the auxiliary material are pressed against each other, thereby plastically deforming the auxiliary material and bonding it to the construction parts, the same material being used for the heat exchanger parts and the auxiliary material, the auxiliary material (2) being arranged in the form of ribs (8) on one of the constructional parts or in the form of a separate wire material and being deformed, under the pressing effect perpendicular to the connection surfaces of the constructional parts, to a degree of 30% to 50% orthogonally to the longitudinal direction of the auxiliary material and to the effective line of the pressing force, in such a way that the yielding auxiliary material spreads between the overlapping surfaces of the constructional parts, thus tearing open the surface oxide layers and the crystal lattices of the heat exchanger parts on said connection surfaces and penetrating cohesively into the crystal lattices.

2. Method according to claim 1, characterised in that the auxiliary material (2) and the construction parts (6, 7) are heated by resistance heating of the auxiliary material.

Fig. 1.

Fig. 2

Fig. 3

Fig. 4

Fig. 5

Fig. 6